Europäisches Patentamt

European Patent Office

Office européen des brevets

(11) Veröffentlichungsnummer: **0 482 505 A1**

## EUROPÄISCHE PATENTANMELDUNG

(21) Anmeldenummer: **91117699.8**

(22) Anmeldetag: **17.10.91**

(51) Int. Cl.5: **B01D 50/00**, B01D 46/24, B04C 9/00, B07B 7/083

(30) Priorität: **24.10.90 DE 4033729**

(43) Veröffentlichungstag der Anmeldung: **29.04.92 Patentblatt 92/18**

(84) Benannte Vertragsstaaten: **AT CH FR GB IT LI NL**

(71) Anmelder: **PROECO INTERNATIONAL GmbH Lehrstrasse 74 W-7460 Balingen(DE)**

(72) Erfinder: **Wettermann, Harry Höhenweg 44/1 W-7277 Wildberg 3(DE)**

(74) Vertreter: **Schiering, Hans, Dipl.-Ing. Westerwaldweg 4 W-7030 Böblingen(DE)**

(54) **Wirbler-Filter-Kombination zum Abscheiden von in Gasen oder Dämpfen dispergierten Teilchen.**

(57) Zwischen einem mit einem tangential einmündenden Rohgaseinlaß (11) versehenen drehsymmetrischen Zyklonmantel (10) und einem drehsymmetrischen Filtermantel (15) eines axial ausmündenden tauchrohrartigen Reingasauslasses (16) ist ein gemeinsamer Abscheideraum (13) gebildet. Vorrangiges Ziel ist die zeitliche Verstetigung des Filterwiderstandes und die Überflüssigmachung von Betriebsunterbrechungen durch das Regenerieren oder Auswechseln der Filterkomponente der Abscheidevorrichtung.

Dafür besteht der Rohgaseinlaß (11) aus einer sich über die Höhe des Filtermantels (15) erstreckenden, in den Abscheideraum (13) hineinragenden und auf voller Länge dicht neben einer Mantellinie des Filtermantels (15) endenden Schlitzdüse und ist der Reingasauslaß (16) um seine Achse (35) drehbar gelagert. Zur Intensivierung der permanenten Reinigung des Filtermantels (15) und zugleich weiterer Erhöhung des Abscheidegrades des Filtermantels (15) ist der Reingasauslaß (16) mittels eines Getriebemotors (17) in der der Zyklonströmung entgegengesetzten Richtung in Umlauf gesetzt.

FIG. 1

Die Erfindung betrifft eine Wirbler-Filter-Kombination zum Abscheiden von in Gasen oder Dämpfen dispergierten Teilchen, bei der zwischen einem mit einem tangential einmündenden Rohgaseinlaß versehenen drehsymmetrischen Zyklonmantel und einem drehsymmetrischen Filtermantel eines axial ausmündenden tauchrohrartigen Reingasauslasses ein gemeinsamer Abscheideraum mit einer sich stirnseitig an ihn anschließenden Ablaßeinrichtung für das Abscheidegut gebildet ist.

Eine derartige Kombinationsvorrichtung vereint platz- und kostensparend in einem Gerät insbesondere das Abscheiden schwererer Staubteilchen mit einer Feinentstaubung, die sonst bei Anwendung eines herkömmlichen Zyklons von einer nachgeschalteten gesonderten Filterstufe zu bewältigen wäre. Gegenüber einer alleinigen Fliehkraftabscheidung wird mit der Wirbler-Filter-Kombination der Abscheidegrad verbessert. Die Zusammenfassung der beiden Teilchenabscheider vermindert die Zahl der Rohgaseinlässe, der Reingasauslässe, der Abscheideräume und der Ablaßeinrichtungen jeweils von zwei auf eins.

Bis zu Temperaturen von ungefähr 170 °C stehen für die Feinentstaubung Tuchfilter zur Verfügung, die meistens in Form von Schlauchfiltern zum Einsatz kommen. Deren Abreinigung erfolgt in der Regel mit Druckluftstößen aus einem Druckbehälter, was mit einem beträchtlichen Geräteaufwand und Energiebedarf verbunden ist. Tuchfilter haben allerdings eine gewisse Tiefbettwirkung, so daß die Abreinigung früher oder später nicht mehr ausreicht. Kommt es zu einer Kondensation von Wasser- oder Säuredämpfen, ist das Filtertuch nach der Austrocknung meistens nicht mehr gebrauchsfähig. In Sorptionsanlagen können Hydrolysevorgänge anstehen, die ähnliche Wirkungen haben. Bei höheren Gastemperaturen behilft man sich mit Vorkühlern, die jedoch mit der vollen Staublast beaufschlagt werden. Eine Verschmutzung des Vorkühlers wirkt sich negativ auf dessen Wirkungsgrad aus, so daß auch an dieser Stelle durch Reinigungsarbeiten Stillstandszeiten erzwungen werden.

Durch das Dokument DT 26 35 292 A1 ist bereits eine Wirbler-Filter-Kombination der eingangs angeführten Gattung bekannt. Der tangential einmündende Rohgaseinlaß dieser Kombinationsvorrichtung hat eine annähernd quadratische Querschnittsfläche und schließt sich mit je einer Seite an den kreiszylindrischen Zyklonmantel und die kreisringförmige Zyklondecke an. Das Filterelement ist anstelle eines Tauchrohrunterteiles angeordnet und befindet sich gänzlich unterhalb des Rohgaseinlasses. Es ist als zylindrische oder konische Filterpatrone ausgebildet, in die zur Beibehaltung der schraubenförmigen Gasströmung gleichsinnig nach innen laufende spiralförmige Kanäle eingearbeitet sind. Die Filterpatrone hat unverkennbar Tiefbettcharakter, was ihre Reinigung erschwert. Für den Filtereinsatz mag zwar eine längere Betriebsdauer als sonst erzielt sein, ohne einen gelegentlichen Filterwechsel und den damit verbundenen Montageaufwand kommt die bekannte Wirbler-Filter-Kombination jedoch nicht aus.

Der Erfindung liegt die Aufgabe zugrunde, eine von besonders kleinen bis zu besonders großen Bauformen realisierbare, in möglichst vielen Industriebereichen einsetzbare und bei Bedarf auch auf sehr hohe Heißgastemperaturen auslegbare Vorrichtung zum hochgradigen Abscheiden von in Gasen oder Dämpfen dispergierten Teilchen zu schaffen, die den Strömungswiderstand ihrer Filterkomponente zeitlich verstetigt und durch Regenerieren oder Auswechseln ihrer Filterkomponente erzwungene Betriebsunterbrechungen überflüssig macht.

Diese Aufgabe wird erfindungsgemäß an einer Wirbler-Filter-Kombination der eingangs angeführten Art dergestalt gelöst, daß der Rohgaseinlaß aus einer sich über die Höhe des drehsymmetrischen Filtermantels erstreckenden, in den Abscheideraum hineinragenden und auf voller Länge dicht neben einer Mantellinie des drehsymmetrischen Filtermantels endenden Schlitzdüse besteht und der den drehsymmetrischen Filtermantel aufweisende tauchrohrartige Reingasauslaß um seine Achse drehbar gelagert ist.

Mit der Schlitzdüse wird darauf verzichtet, daß dem Rohgasstrom im Wirbler ein annähernd einheitlicher Spiralweg zur Verfügung steht. Stattdessen verbleiben die Gasmassen in unterschiedlichen Höhen länger auf kreisnahen Bahnen, weil durch den Düsencharakter des Rohgaseinlasses in vermehrtem Maße an den Rohgasstrahl angrenzendes Gas mitgerissen wird. In der Nähe der Schlitzdüse entsteht sogar ein stark ausgeprägter Unterdruck, der zur automatischen Reinigung des Filtermantels genutzt wird. Da der tauchrohrartige Reingasauslaß um seine Achse drehbar gelagert ist, kommen laufend neue Abschnitte des Filtermantels in diese Reinigungszone. Die lokale Reinigung wiederholt sich nach jedem Umlauf des Filtermantels, so daß sich nie eine größere Verschmutzung aufbauen kann und der Strömungswiderstand des Filtermantels zeitlich verstetigt wird. Ein gleichbleibender Filterwiderstand ist für das Regelverhalten einer den Rohgasstrom liefernden oder einer den Reingasstrom aufnehmenden Anlage günstig. Obwohl der Rohgaseinlaß der Wirbler-Filter-Kombination mit seiner Ausbildung und Anordnung zur Reinigung des Filters herangezogen ist, dient er zugleich der Erhöhung des Abscheidegrades, indem die Anströmbedingungen zum Filtermantel verbessert sind. Anstatt überwiegend annähernd frontal treffen nämlich die von der Fliehkraftabscheidung nicht erfaßten Feinstaubteilchen in einem sehr flachen Winkel auf die Poren des Filtermantels auf. Die daraus resultierende Wirkung ist so, als ob der Porendurchmesser nur ein Bruchteil vom tatsächlichen wäre. Um die Fliehkraftwirkung stärker zu nutzen und den Filtermantel mit noch weniger Staub zu beaufschlagen, können im Rohgaseinlaß über dessen Querschnitt hinweg Teilströmungskammern mit entgegengesetzt gepolten Hochspannungselektroden aufeinanderfolgen, was bei der Wiedervereinigung der Rohgasteilströme zu einer intensiven Agglomeration von Feinstaubteilchen führt. Der Filtermantel kann aus einem Metallgewebe oder einem anderen hochtemperaturfesten Porenfiltermaterial bestehen, so daß sich für die Wirbler-Filter-Kombination ein vorkühlerfreier Einsatzbereich bis zu Rohgastemperaturen von etwa 600 °C ergibt. Zu den mit der Erfindung erzielten Vorteilen zählt aber auch, daß sich die Abscheidevorrichtung von besonders kleinen bis zu besonders großen Bauformen realisieren läßt und durch Regenerieren oder Auswechseln des Filtermantels erzwungene Betriebsunterbrechungen in einer den Rohgasstrom liefernden oder einer den Reingasstrom aufnehmenden Anlage vermieden werden.

Ein aufgrund der in den Unteransprüchen angegebenen Erfindungsausgestaltungen bevorzugtes Ausführungsbeispiel der Erfindung ist in der Zeichnung dargestellt und wird im folgenden näher beschrieben. Es zeigt

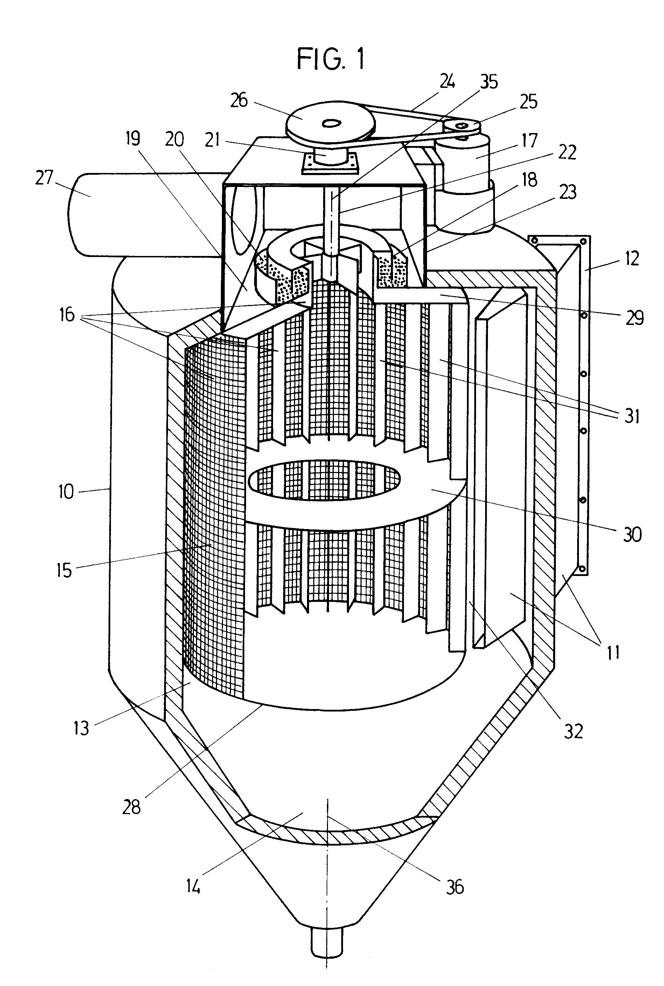

Fig. 1     eine perspektivische Ansicht der beschriebenen Abscheidevorrichtung mit einem sektoralen Schnitt,

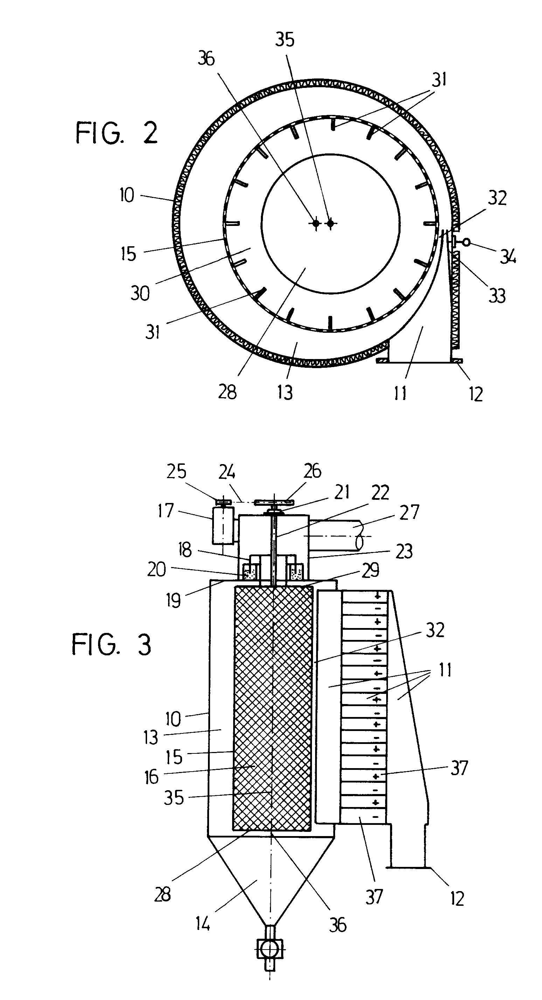

Fig. 2     einen radialen Querschnitt der durch einen exzentrischen Reingasauslaß modifizierten Abscheidevorrichtung und

Fig. 3     einen axialen Längsschnitt der durch einen Elektroabscheider ergänzten Wirbler-Filter-Kombination.

Bei der in der Zeichnung wiedergegebenen Wirbler-Filter-Kombination ist der drehsymmetrische Zyklonmantel 10 Bestandteil eines wärme- und schalldämmenden Isoliergehäuses. Der am Zyklonmantel 10 tangential einmündende Rohgaseinlaß 11 besitzt zum Anschließen an eine Rohgasquelle einen rechteckigen Flansch 12 und verjüngt sich innerhalb des dem Wirbler und dem Filter gemeinsamen Abscheideraumes 13 als Schlitzdüse. Die sich stirnseitig an den Abscheideraum 13 anschließende Ablaßeinrichtung 14 für das nach unten absinkende Abscheidegut besteht aus einem in das Isoliergehäuse integrierten Trichter.

Um den in der Nähe des Rohgaseinlasses 11 am drehsymmetrischen Filtermantel 15 zur automatischen Reinigung des Filtermantels 15 erzeugten Unterdruck zu steigern und um zugleich die zur Erhöhung des Abscheidegrades des Filtermantels 15 geschaffenen Anströmbedingungen weiter zu verbessern, ist der den drehsymmetrischen Filtermantel 15 aufweisende tauchrohrartige Reingasauslaß 16 mittels eines Getriebemotors 17 in der der Zyklonströmung entgegengesetzten Richtung in Umlauf gesetzt. Dadurch, daß der tauchrohrartige Reingasauslaß 16 an seinem verjüngten oberen Ende mit einer ringförmigen Dichtschürze 18 in eine auf der Zyklondecke 19 installierte Sandrinne 20 eingreift und von einer das Lager 21 seiner Antriebswelle 22 tragenden Abzugshaube 23 überwölbt ist, wird trotz der für den Filtermantel 15 vorgesehenen Bewegungsmöglichkeit für eine gasdichte, stabile und kompakte Bauform der Wirbler-Filter-Kombination gesorgt. Der Getriebemotor 17 ist neben der Abzugshaube 23 auf der Zyklondecke 19 untergebracht und mit der Antriebswelle 22 durch einen Treibriemen 24 und zwei Riemenscheiben 25 und 26 verbunden. Zur Weiterleitung des Reingasstromes geht von der Abzugshaube 23 auf der dem Getriebemotor 17 gegenüberliegenden Seite ein in Bezug auf die Antriebswelle 22 radialer Rohrstutzen 27 ab.

Der Filtermantel 15 ist als ein lediglich eine Lage Poren aufweisender ausschließlicher Oberflächenfilter ohne die Eigenschaft eines Tiefbettfilters ausgebildet, so daß die zeitliche Verstetigung des Filterwiderstandes noch weiter verbessert ist und durch Regenerieren oder Auswechseln des Filtermantels 15 bedingte Betriebsunterbrechungen noch nachhaltiger vermieden sind. Sofern der Filtermantel 15 aus einem Metallgewebe oder einem anderen hochtemperaturfesten Porenfiltermaterial besteht, ergibt sich für die Wirbler-Filter-Kombination ein vorkühlerfreier Einsatzbereich bis zu Rohgastemperaturen von etwa 600 °C, weil weder Dehnungs- noch Dichtungsschwierigkeiten auftreten. Metallgewebe stehen mit Porengrößen bis zu fünf Mikrometer herunter zur Verfügung. Bevorzugt werden Drahtgeflechte mit dreieckigen Porenöffnungen. Die Verwendung solcher Materialien wird dadurch erleichtert, daß zur Abstützung des Filtermantels 15 außer einem kreisscheibenförmigen Trommelboden 28 und einer kreisringförmigen Trommelscheibe 29 kreisringförmige Zwischenringe 30 und ein Kranz diese allesamt miteinander verbindender, mantellinienförmig am Filtermantel 15 endender und radial ausgerichteter Stützlamellen 31 vorgesehen sind.

Zum Zwecke der Anpassung an den jeweiligen Einsatzfall der Wirbler-Filter-Kombination, der Optimierung des Unterdrucks für die Selbstreinigung des Filtermantels 15 und der Ermöglichung unterschiedlicher Anströmbedingungen des Rohgasstromes gegenüber dem Filtermantel 15 ist die Schlitzbreite des sich als Schlitzdüse allmählich verjüngenden Rohgaseinlasses 11 unter Beibehaltung der Breite des zum Filtermantel 15 verbleibenden kleinen Restspalts 32 mittels einer an der äußeren Schlitzdüsenwand 33 angreifenden Justiereinrichtung 34 einstellbar. Die Justiereinrichtung 34 kann einen gasdruckabhängig geregelten Stellmotor enthalten, so daß sich der Filterwiderstand des Filtermantels 15 bei einer schwankenden Befrachtung des Rohgases mit abzuscheidenden Teilchen noch besser auf einen vorgegebenen Sollwert stabilisieren läßt.

Sofern der tauchrohrartige Reingasauslaß 16 mit seiner Achse 35 gegenüber der Zyklonachse 36 zum Rohgaseinlaß 11 hin exzentrisch verlagert ist, kommt es zu einer stärkeren sektormäßigen Differenzierung der Wirblerabscheidung, der Filterabscheidung und der permanenten automatischen Reinigung der Filterkomponente der Wirbler-Filter-Kombination. Die Wirblerabscheidung konzentriert sich mehr auf den dem Rohgaseinlaß 11 gegenüberliegenden Bereich mit der größten Breite des gemeinsamen Abscheideraumes 13. Dort sinken bereits vor dem Zyklonmantel 10 schwerere Abscheideteilchen vermehrt in einer Wolke nieder, so daß der Filtermantel 15 des rotierenden Reingasauslasses 16 stärker mit der Abscheidung der allerfeinsten Teilchen befaßt sein kann.

Eine weitere Steigerung seiner Feinfilterfunktion erhält der Filtermantel 15 dadurch, daß im Rohgaseinlaß 11 über dessen Querschnitt hinweg Teilströmungskammern 37 mit entgegengesetzt gepolten Hochspannungselektroden aufeinanderfolgen. Nach der Wiedervereinigung der Rohgasteilströme ziehen sich entgegengesetzt aufgeladene Abscheideteilchen gegenseitig an und agglomerieren zu größeren und schwereren Teilchen, die sodann von der Fliehkraftabscheidung besser erfaßt werden. Auch diese Entlastung des Filtermantels 15 erlaubt eine Reservierung und Ausrichtung des Filtermantels 15 auf die abschließende Abscheidung der verbliebenen allerfeinsten Teilchen. Die zusätzliche Integration des Elektroabscheiders in die Wirbler-Filter-Kombination beeinträchtigt die für die Wirbler-Filter-Kombination erzielte kompakte Bauform nur ganz unwesentlich.

Dadurch, daß der Rohgaseinlaß 11 aus einer sich über die Höhe des drehsymmetrischen Filtermantels 15 erstreckenden, in den Abscheideraum 13 hineinragenden und auf voller Länge dicht neben einer Mantellinie des drehsymmetrischen Filtermantels 15 endenden Schlitzdüse besteht und der den drehsymmetrischen Filtermantel 15 aufweisende tauchrohrartige Reingasauslaß 16 um seine Achse 35 drehbar gelagert ist, erhält die Filterkomponente der Wirbler-Filter-Kombination gleichsam eine neue Funktion. Sie wird wie der vorgeschaltete Elektroabscheider zum Agglomerationsinstrument, weil in der Nähe der Schlitzdüse vom Filtermantel 15 ständig durch Unterdruck der Fliehkraftabscheidung zugängliche Teilchen abgelöst werden, die zuvor an den Poren des Filtermantels 15 aus Feinstteilchen zusammengeblasen wurden. Die vom Getriebemotor 17 erzwungene Bewegung des Filtermantels 15 in der der Zyklonströmung entgegengesetzten Richtung fördert dieses nachgeordnete Zusammenballen von Feinstteilchen und unterstützt zugleich das Abreinigen der am Filtermantel 15 agglomerierten Teilchen.

**Patentansprüche**

1. Wirbler-Filter-Kombination zum Abscheiden von in Gasen oder Dämpfen dispergierten Teilchen, bei der zwischen einem mit einem tangential einmündenden Rohgaseinlaß (11) versehenen drehsymmetrischen Zyklonmantel (10) und einem drehsymmetrischen Filtermantel (15) eines axial ausmündenden tauchrohrartigen Reingasauslasses (16) ein gemeinsamer Abscheideraum (13) mit einer sich stirnseitig an ihn anschließenden Ablaßeinrichtung (14) für das Abscheidegut gebildet ist, **dadurch gekennzeichnet,** daß der Rohgaseinlaß (11) aus einer sich über die Höhe des drehsymmetrischen Filtermantels (15) erstreckenden, in den Abscheideraum (13) hineinragenden und auf voller Länge dicht neben einer Mantellinie des drehsymmetrischen Filtermantels (15) endenden Schlitzdüse besteht und der den drehsymmetrischen Filtermantel (15) aufweisende tauchrohrartige Reingasauslaß (16) um seine Achse (35) drehbar gelagert ist.

2. Wirbler-Filter-Kombination nach Anspruch 1, dadurch gekennzeichnet, daß der den drehsymmetrischen Filtermantel (15) aufweisende tauchrohrartige Reingasauslaß (16) mittels eines Getriebemotors (17) in der der Zyklonströmung entgegengesetzten Richtung in Umlauf gesetzt ist.

3. Wirbler-Filter-Kombination nach Anspruch 2, dadurch gekennzeichnet, daß der tauchrohrartige Reingasauslaß (16) an seinem verjüngten oberen Ende mit einer ringförmigen Dichtschürze (18) in eine auf der Zyklondecke (19) installierte Sandrinne (20) eingreift und von einer das Lager (21) seiner Antriebswelle (22) tragenden Abzugshaube (23) überwölbt ist.

4. Wirbler-Filter-Kombination nach einem der Ansprüche 1 bis 3, dadurch gekennzeichnet, daß zur Abstützung des Filtermantels (15) außer einem kreisscheibenförmigen Trommelboden (28) und einer kreisringförmigen Trommeldecke (29) kreisringförmige Zwischenringe (30) und ein Kranz diese allesamt miteinander verbindender, mantellinienförmig am Filtermantel (15) endender und radial ausgerichteter Stützlamellen (31) vorgesehen sind.

5. Wirbler-Filter-Kombination nach einem der Ansprüche 1 bis 4, dadurch gekennzeichnet, daß der Filtermantel (15) als ein lediglich eine Lage Poren aufweisender ausschließlicher Oberflächenfilter ohne die Eigenschaft eines Tiefbettfilters ausgebildet ist.

6. Wirbler-Filter-Kombination nach einem der Ansprüche 1 bis 5, dadurch gekennzeichnet, daß der Filtermantel (15) aus einem Metallgewebe oder einem anderen hochtemperaturfesten Porenfiltermaterial besteht.

7. Wirbler-Filter-Kombination nach einem der Ansprüche 1 bis 6, dadurch gekennzeichnet, daß die Schlitzbreite des sich als Schlitzdüse allmählich verjüngenden Rohgaseinlasses (11) unter Beibehaltung der Breite des zum Filtermantel (15) verbleibenden kleinen Restspalts (32) mittels einer an der äußeren Schlitzdüsenwand (33) angreifenden Justiereinrichtung (34) einstellbar ist.

8. Wirbler-Filter-Kombination nach einem der Ansprüche 1 bis 7, dadurch gekennzeichnet, daß der tauchrohrartige Reingasauslaß (16) mit seiner Achse (35) gegenüber der Zyklonachse (36) zum Rohgaseinlaß (11) hin exzentrisch verlagert ist.

9. Wirbler-Filter-Kombination nach einem der Ansprüche 1 bis 8, dadurch gekennzeichnet, daß im Rohgaseinlaß (11) über dessen Querschnitt hinweg Teilströmungskammern (37) mit entgegengesetzt gepolten Hochspannungselektroden aufeinanderfolgen.

## FIG. 1

FIG. 2

FIG. 3

**Europäisches
Patentamt**

**EUROPÄISCHER
RECHERCHENBERICHT**

Nummer der Anmeldung

**EP 91 11 7699**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,A | US-A-4 969 934 (UNITED STATES DEPARTMENT OF ENERGY) <br> * Spalte 2, Zeile 50 - Spalte 3, Zeile 27 * <br> * Spalte 4, Zeile 12 - Zeile 35 * <br> * Spalte 6, Zeile 47 - Spalte 8, Zeile 33 * <br> * Abbildungen 1,2 * * | 1-6 | B 01 D 50/00 <br> B 01 D 46/24 <br> B 04 C 9/00 <br> B 07 B 7/083 |
| A | FR-A-2 621 257 (SUN COUNTRY ENGINEERING SARL.) <br> * Zusammenfassung * <br> * Seite 2, Zeile 7 - Seite 4, Zeile 2 * <br> * Abbildung 1 * * | 1,2,5,8 | |
| A | EP-A-0 087 778 (KERNFORSCHUNGSANLAGE JÜLICH GMBH) <br> * Zusammenfassung * <br> * Seite 1, Zeile 1 - Zeile 9 * <br> * Seite 5, Zeile 1 - Seite 7, Zeile 34 * <br> * Abbildungen 1,2 * * | 1,5,6 | |
| P,A | FR-A-2 654 951 (L.-M.-E. ROUSSEAU) <br> * Zusammenfassung * <br> * Seite 1, Zeile 1 - Zeile 4 * <br> * Seite 3, Zeile 5 - Zeile 39 * <br> * Seite 4, Zeile 16 - Seite 5, Zeile 24 * <br> * Seite 6, Zeile 12 - Zeile 28 * <br> * Abbildungen 1,4,5 * * | 4-6 | RECHERCHIERTE SACHGEBIETE (Int. Cl.5) <br><br> B 01 D <br> B 04 C <br> B 07 B |
| A | US-A-2 696 273 (RESEARCH CORPORATION) <br> * das ganze Dokument * * | 1,7,9 | |
| A | FR-A-2 629 371 (E.H.G. STUMM) <br> * Zusammenfassung * <br> * Seite 6, Zeile 1 - Zeile 20 * <br> * Abbildungen 1,6 * * | 1,7 | |

–/–

Der vorliegende Recherchenbericht wurde für alle Patentansprüche erstellt

| Recherchenort | Abschlußdatum der Recherche | Prüfer |
|---|---|---|
| Den Haag | 29 Januar 92 | STEVNSBORG N. |

**Europäisches Patentamt**

# EUROPÄISCHER RECHERCHENBERICHT

Nummer der Anmeldung

## EP 91 11 7699

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 204 412 (F.L.SMIDTH & CO.)<br>* Zusammenfassung *<br>* Seite 3, Zeile 36 - Seite 5, Zeile 6 *<br>* Abbildung * *<br>– – – – – | 1,2,4,7 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| Den Haag | 29 Januar 92 | STEVNSBORG N. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------
& : Mitglied der gleichen Patentfamilie, übereinstimmendes Dokument